# FASCICULE DE BREVET EUROPEEN

(11) **EP 0 729 553 B1**
(45) Date de publication et mention de la délivrance du brevet: **22.12.1999**
(21) Numéro de dépôt: 95932044.1
(22) Date de dépôt: 22.09.1995
(51) Int. Cl.: F16F 15/131

(54) **DOUBLE VOLANT AMORTISSEUR**
ZWEIMASSENSCHWUNGRAD
DOUBLE DAMPING FLY-WHEEL

(30) Priorité: 26.09.1994 FR 9411434
(43) Date de publication de la demande: 04.09.1996
(73) Titulaire: VALEO, 75017 Paris (FR)
(72) Inventeur: MOKDAD, Ayman, F-93400 Saint-Ouen (FR)
(74) Mandataire: Gamonal, Didier
(86) Numéro de dépôt international: FR9501222
(87) Numéro de publication internationale: WO9610139

(56) Documents cités:
- EP-A- 0 002 581
- EP-A- 0 427 983
- EP-A- 0 555 817
- FR-A- 2 658 880
- FR-A- 2 695 579
- PATENT ABSTRACTS OF JAPAN vol. 13 no. 469 (M-883) ,24 Octobre 1989 & JP,A,01 182651 (NISSAN MOTOR CO LTD) 20 Juillet 1989,

## Description

La présente invention concerne un volant amortisseur et plus particulièrement un double volant amortisseur du genre comportant deux masses coaxiales montées mobiles circonférentiellement l'une par rapport à l'autre, à l'encontre de moyens élastiques, d'amortissement.

Un tel volant amortisseur, notamment pour véhicule automobile, est décrit par exemple dans le document FR-A-2 565 650. L'une des masses, ci-après dénommée "première masse" est destinée à être fixée à un arbre menant tandis que l'autre masse, ci-après dénommée "deuxième masse" comporte généralement un plateau de réaction pour un embrayage à friction. Les masses en question peuvent être réalisées en matériau moulé, par exemple en fonte. Selon la complexité du dispositif, le moulage est relativement difficile à réaliser, notamment celui de la première masse.

Dans le document EP-A-0 427 983, conforme au préambule de revendication 1, est décrit un perfectionnement de ladite première masse, c'est-à-dire celle qui doit être fixée à l'arbre menant.

Plus précisément, cette première masse est essentiellement constituée d'une partie centrale en tôle destinée à être fixée audit arbre menant et d'au moins une partie massive, de forme globalement annulaire. La partie centrale est soudée sur la partie massive. Cette réalisation n'est pas économique.

C'est donc un but de l'invention de réaliser la première masse de façon plus économique et plus simple. Ce problème est résolu selon l'invention par la partie caractérisante de la revendication 1.

Cette partie massive est profitablement en fonte. Les pattes pourraient être définies aux extrémités de bras radiaux de la partie centrale.

L'invention sera mieux comprise et d'autres avantages de celle-ci apparaîtront plus clairement à la lumière de la description qui va suivre d'un mode de réalisation possible d'un volant amortisseur conforme à l'invention, donnée uniquement à titre d'exemple et faite en référence aux dessins annexés dans lesquels :
- la figure 1 est une demi-coupe axiale d'un double volant amortisseur conforme à l'invention, vu selon la ligne de coupe I-I de la figure 2 ; et
- la figure 2 est une demi-coupe II-II du volant amortisseur de la figure 1.

Sur les dessins, on a représenté un dispositif formant double volant amortisseur 11 pour véhicule automobile comportant deux parties coaxiales montées mobiles l'une par rapport à l'autre à l'encontre de moyens élastiques d'amortissement 14. Ce dispositif est monté sur l'arbre du moteur d'un véhicule automobile. Les deux parties constituent des masses coaxiales tournant autour d'un axe de symétrie X-X qui est aussi l'axe de rotation commun d'un arbre menant 16, ici le vilebrequin du moteur à combustion interne, d'un embrayage partiellement représenté et d'un arbre d'entrée d'une boîte de vitesses, non représentés.

Une première masse tournante 12 est connectée, ici par des vis 15, situées au voisinage de sa périphérie interne à l'arbre menant 16, tandis qu'une seconde masse tournante 13 est couplée de manière débrayable par l'intermédiaire du mécanisme d'embrayage (non représenté) à l'arbre d'entrée de la boîte de vitesses. La seconde masse 13 est montée en rotation sur un moyeu tubulaire 17 de la première masse 12 par l'intermédiaire d'un palier de rotation constitué ici d'un roulement à billes 18. La seconde masse 13 constitue de façon classique le plateau de réaction de l'embrayage mentionné ci-dessus.

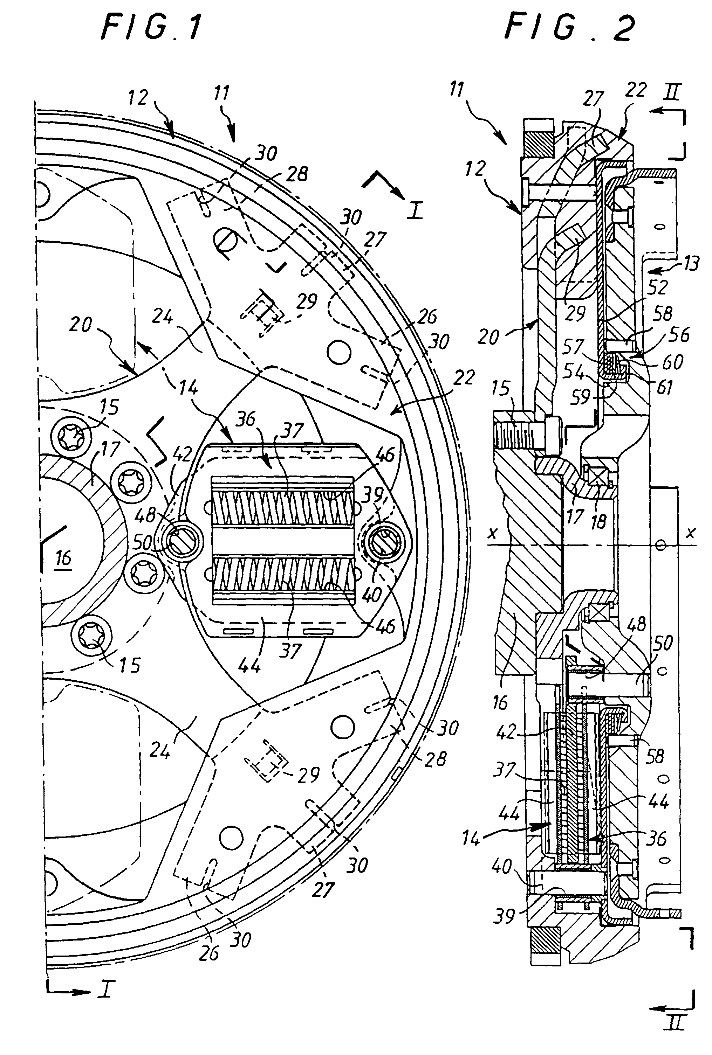

La première masse 12 se compose essentiellement d'une partie centrale 20, en tôle, soudée au moyeu 17 et fixée à l'arbre menant 16 et d'une partie massive 22, en fonte, ici de forme globalement annulaire, raccordée à la périphérie externe de cette partie centrale 20, ici en forme de flasque. Plus précisément, cette dernière comporte des bras radiaux 24 munis de pattes périphériques 26, 27, 28 insérées selon l'invention au coeur de la partie massive. La forme de ces pattes (qui définissent une sorte de croix à l'extrémité de chaque bras radial) est visible notamment sur la figure 2.

Une patte supplémentaire 29 est obtenue en réalisant une découpe en U dans le bras radial et en repliant la partie métallique ainsi individualisée. De plus, chaque patte comporte une fente 30 la partageant en deux parties, lesquelles sont courbées l'une par rapport à l'autre. De façon générale, les pattes sont courbées au coeur de la partie massive, comme cela ressort de la figure 1. En fait, ladite partie massive 22 annulaire, selon l'invention, est surmoulée à la périphérie externe de ladite partie centrale 20, c'est-à-dire sur l'ensemble des pattes 26-29 définies aux extrémités des quatre bras radiaux 24 de ladite partie centrale. Cette opération de surmoulage réalise une sorte de soudure entre les pattes, qui sont ramollies au moment du surmoulage, et la partie massive en fonte.

Les moyens élastiques 14 précités sont constitués ici par quatre cassettes 36 abritant des ressorts 37 qui interviennent ici globalement radialement entre les deux masses. Chaque cassette comporte un palier 39 engagé sur un tourillon 40 solidaire de la première masse 13, plus particulièrement monté dans un trou d'orientation axiale de ladite partie massive 22. La cassette proprement dite, relativement plate axialement, abrite deux ressorts 37 hélicoïdaux et un voile central 42 muni de découpes permettant le logement desdits ressorts. Les parois 44 de la cassette reliées entre elles par leurs bords latéraux, ici par agrafage, en variante par soudage, forment deux pièces de guidage parallèles pour les ressorts, elles sont munies de fenêtres 46 à bords longitudinaux repliés vers l'extérieur, et placées en vis-à-vis des découpes, ici des fenêtres, du voile. Ces deux parois sont solidaires du palier 39 engagé sur le tourillon 40. Le voile 42 est solidaire d'un palier 48 monté au voisinage de son extrémité radialement la plus interne et ce palier est engagé sur un tourillon 50 monté dans l'épaisseur de ladite seconde masse 13. Les ressorts 37 sont sollicités entre une extrémité de la cassette et le voile. Cet agencement des moyens élastiques à cassettes ne fait pas directement partie de l'invention et ne sera donc pas décrit plus en détail.

Pour mémoire on mentionnera en fonctionnement que les cassettes 36 s'inclinent avec compression des ressorts 37 globalement à action radiale.

En outre, ladite partie massive 22 est munie, du côté de ladite seconde masse, d'une plaque de fermeture 52, en tôle s'étendant radialement vers l'intérieur pour fermer la cavité dans laquelle sont logées les cassettes. Cette plaque de fermeture 52 comporte une partie sensiblement cylindrique 54 à sa périphérie interne qui sert de support à un agencement de frottement sec 56 constitué d'une rondelle de frottement 57 solidaire en rotation de ladite seconde masse par des goupilles 58, d'une rondelle d'appui 59 solidaire en rotation de la plaque 52 et d'une rondelle Belleville 60 montée sous précontrainte entre la rondelle d'appui 59 et des pattes 61 recourbées à l'extrémité de la partie cylindrique 54 de la plaque de fermeture 52. Le tourillon 40 est solidaire également de la plaque de fermeture 52.

En fonctionnement la rondelle de frottement 57, serrée entre la plaque 52 et la rondelle d'appui 59 sous l'action de la rondelle 60, frotte contre les faces concernées de la plaque 52 et de la rondelle d'appui 59 présentant ici à sa périphérie interne des pattes engagées dans des échancrures formées dans la partie cylindrique 54.

Bien entendu, le moyeu 17 peut être d'un seul tenant avec le flasque central 20, qui présente des ouvertures de dégagement (non référencées) au niveau des cassettes 36. On appréciera la robustesse et la simplicité de la première masse 12. On appréciera que les cassettes 36 ont une grande longueur car elle sont articulées à la périphérie interne de la seconde masse et à la périphérie externe de la première masse.

En outre le roulement 18 est de petite taille en sorte que la seconde masse 13 peut être doté de trous permettant un accès aux vis 15.

Grâce à l'invention l'anneau 22 s'étend en saillie axiale par rapport à la partie centrale 20 et ce par rapport aux deux faces de la partie centrale 20, ce qui permet d'augmenter de manière aisée l'inertie tout en occupent au mieux la place disponible. La disposition selon l'invention est plus économique qu'une fixation par soudage comme décrit dans le document EP 0 427 983 ou par sertissage comme décrit dans le document FR-A-2 695 579.

On voit que grâce à l'invention l'anneau 22 est bien suspendu à la partie centrale 20 du fait des pattes périphériques 26, 29. On obtient une solution bien équilibrée. Grâce à l'anneau en matière moulable on peut créer aisément des cavités pour le montage des cassettes 36.

Grâce aux bras radiaux 24 on obtient une bonne ventilation du double volant tout en ayant une bonne inertie.

## Revendications

1. Volant amortisseur, notamment pour véhicule automobile, du genre comportant deux masses coaxiales (12,13) montées mobiles circonférentiellement l'une par rapport à l'autre à l'encontre de moyens élastiques (14) d'amortissement, dans lequel l'une (12) des masses est destinée à être fixée à un arbre menant (16), et est essentiellement constituée d'une partie centrale (20) en tôle, destinée à être fixée audit arbre menant (16), et d'au moins une partie massive (22), de forme globalement annulaire, raccordée à la périphérie externe de ladite partie centrale (20) et s'étendant en saillie axiale par rapport à ladite partie centrale (20), caractérisé en ce que ladite partie centrale (20) comporte des pattes (26-29) périphériques et en ce que la partie massive (22) est surmoulée à la périphérie externe de la partie centrale (20) sur les pattes périphériques (26-29) de celle-ci en sorte que lesdites pattes sont insérées au coeur de la partie massive (22).

2. Volant amortisseur selon la revendication 1, caractérisé en ce que ladite partie massive (22) est en fonte,

3. Volant amortisseur selon la revendication 1 ou 2, caractérisé en ce que lesdites pattes (26-29) sont définies aux extrémités de bras radiaux (24), que comporte ladite partie centrale.

4. Volant amortisseur selon la revendication 3, caractérisé en ce que lesdites pattes (26-29) sont courbées au coeur de ladite partie massive (22).

5. Volant amortisseur selon la revendication 4, caractérisé en ce que chaque patte (26-29) comporte une fente (30) la partageant en deux parties, lesquelles sont courbées l'une par rapport à l'autre.

6. Volant amortisseur selon l'une quelconque des revendications 3 à 5, caractérisé en ce que les pattes (26-29) définissent une croix à l'extrémité de chaque bras radial (24).

7. Volant amortisseur selon l'une quelconque des revendications 3 à 6, caractérisé en ce qu'une patte supplémentaire (29) est obtenue en réalisant une découpe en U dans le bras radial (24) et en repliant la partie métallique ainsi individualisée.

8. Volant amortisseur selon l'une quelconque des revendications 1 à 7, caractérisé en ce que les moyens élastiques d'amortissement (14) sont constitués par des cassettes (36) intervenant globalement radialement entre les deux masses (12,13) en étant montées à articulation, d'une part, à la périphérie interne de la seconde masse (13) formant plateau de réaction d'un embrayage et, d'autre part, à la périphérie externe de la partie massive (22).

9. Volant amortisseur selon la revendication 8, caractérisé en ce que la partie massive (22) est munie du côté de la seconde masse (13) d'une plaque de fermeture (52) pour montage de tourillons (40) d'articulation des cassettes (36) à la première masse (12).

10. Volant amortisseur selon la revendication 8 ou 9, caractérisé en ce que chaque cassette (36) comporte un voile centrale (42) monté à articulation à la périphérie interne de la seconde masse (13) et deux parois (44) montées à articulation à la périphérie externe de la partie massive (22).

## Patentansprüche

1. Dämpfungsschwungrad, insbesondere für Kraftfahrzeuge, umfassend zwei im Verhältnis zueinander beweglich entgegen elastischen Dämpfungsmitteln (14) gelagerte koaxiale Massen (12, 13), wobei eine (12) der Massen zur Befestigung an einer treibenden Welle (16) bestimmt ist und im wesentlichen aus einem Mittelteil (20) aus Blech, der zur Befestigung an der besagten treibenden Welle (16) bestimmt ist, und aus einem insgesamt ringförmigen massiven Teil (22) besteht, der sich an den äußeren Umfang des besagten Mittelteils (20) anschließt und sich im Verhältnis zu dem besagten Mittelteil (20) axial vorstehend erstreckt, **dadurch gekennzeichnet,** daß der besagte Mittelteil (20) Umfangsansätze (26-29) umfaßt und daß der massive Teil (22) am äußeren Umfang des Mittelteils (20) auf dessen Umfangsansätzen (26-29) aufgeformt ist, so daß die besagten Ansätze in den Kern des massiven Teils (22) eingesetzt sind.

2. Dämpfungsschwungrad nach Anspruch 1, **dadurch gekennzeichnet,** daß der besagte massive Teil (22) aus Gußeisen besteht.

3. Dämpfungsschwungrad nach Anspruch 1 oder 2, **dadurch gekennzeichnet**, daß die besagten Ansätze (26-29) an den Enden von radialen Armen (24) ausgebildet sind, die der besagte Mittelteil umfaßt.

4. Dämpfungsschwungrad nach Anspruch 3, **dadurch gekennzeichnet,** daß die besagten Ansätze (26-29) am Kern des besagten massiven Teils (22) gekrümmt sind.

5. Dämpfungsschwungrad nach Anspruch 4, **dadurch gekennzeichnet,** daß jeder Ansatz (26-29) einen Schlitz (30) enthält, der ihn in zwei Teile unterteilt, die im Verhältnis zueinander gekrümmt sind.

6. Dämpfungsschwungrad nach einem der Ansprüche 3 bis 5, **dadurch gekennzeichnet,** daß die Ansätze (26-29) ein Kreuz am Ende jedes radialen Arms (24) definieren.

7. Dämpfungsschwungrad nach einem der Ansprüche 3 bis 6, **dadurch gekennzeichnet,** daß ein zusätzlicher Ansatz (29) durch die Ausführung eines U-förmigen Einschnitts im radialen Arm (24) und durch Umbiegen des so herausgearbeiteten Metallteils entsteht.

8. Dämpfungsschwungrad nach einem der Ansprüche 1 bis 7, **dadurch gekennzeichnet,** daß die elastischen Dämpfungsmittel (14) aus Kassetten (36) bestehen, die radial zwischen den zwei Massen (12, 13) zum Einsatz kommen, wobei sie einerseits am inneren Umfang der zweiten Masse (13), die die Gegenanpreßplatte einer Kupplung bildet, und andererseits am äußeren Umfang des massiven Teils (22) angelenkt sind.

9. Dämpfungsschwungrad nach Anspruch 8, **dadurch gekennzeichnet,** daß der massive Teil (22) auf der Seite der zweiten Masse (13) mit einer Verschlußplatte (52) für die Anbringung von Lagerzapfen (40) zur Anlenkung der Kassetten (36) an der ersten Masse (12) versehen ist.

10. Dämpfungsschwungrad nach Anspruch 8 oder 9, **dadurch gekennzeichnet,** daß jede Kassette (36) eine mittlere Zwischenscheibe (42), die am inneren Umfang der zweiten Masse (13) angelenkt ist, und zwei Wände (44) umfaßt, die am äußeren Umfang des massiven Teils (22) angelenkt sind.

## Claims

1. A damped flywheel, especially for a motor vehicle, of the kind comprising two coaxial masses (12, 13) mounted for circumferential movement of one with respect to the other against the action of resilient damping means (14), in which one (12) of the masses is arranged to be fixed to a driving shaft (16), and consists essentially of a central portion (20) of sheet metal adapted to be fixed to the said driving shaft (16), together with at least one solid portion (22) of generally annular form, which is joined to the outer periphery of the said central portion (20) and which projects axially with respect to the said central portion (20), characterised in that the said central portion (20) includes peripheral lugs (26-29), and in that the solid portion (22) is moulded on the outer periphery of the central portion (20), on the peripheral lugs (26-29) of the latter, so that the said lugs are inserted into the heart of the solid portion (22).

2. A damped flywheel according to Claim 1,
characterised in that the said solid portion (22) is a casting.

3. A damped flywheel according to Claim 1 or Claim 2,
characterised in that the said lugs (26-29) are defined at the ends of radial arms (24) which are part of the said central portion.

4. A damped flywheel according to Claim 3,
characterised in that the said lugs (26-29) are curved inside the said solid portion (22).

5. A damped flywheel according to Claim 4,
characterised in that each lug (26-29) has a slot (30) which divides it into two portions, which are curved in relation to one another.

6. A damped flywheel according to any one of Claims 3 to 5, characterised in that the lugs (26-29) define a cross at the end of each radial arm (24).

7. A damped flywheel according to any one of Claims 3 to 6, characterised in that a supplementary lug (29) is obtained by forming a U-shaped cut-out in the radial arm (24) and bending back the metallic portion which has thereby been created.

8. A damped flywheel according to any one of Claims 1 to 7, characterised in that the resilient damping means (14) consist of cassettes (36) which are operatively interposed generally radially between the two masses (12, 13), and which are articulated, firstly to the inner periphery of the second mass (13) defining a reaction plate of a clutch, and secondly to the outer periphery of the solid portion (22).

9. A damped flywheel according to Claim 8,
characterised in that the solid portion (22) is provided, on the same side as the second mass (13), with a closure plate (52) for carrying pivot pins (40) for articulating the cassettes (36) to the first mass (12).

10. A damped flywheel according to Claim 8 or Claim 9,
characterised in that each cassette (36) comprises a central damper plate (42) which is articulated to the inner periphery of the second mass (13), and two walls (44) which are articulated to the outer periphery of the solid portion (22).
